# EUROPÄISCHE PATENTSCHRIFT

(11) **EP 2 252 650 B1**
(45) Veröffentlichungstag und Bekanntmachung des Hinweises auf die Patenterteilung: **28.12.2011**
(21) Anmeldenummer: 09720752.6
(22) Anmeldetag: 03.03.2009
(51) Int. Cl.: C08J 3/03, C08J 7/04, C08L 29/04, C08L 83/04, D06M 15/333, D06M 15/643

(54) **BINDERHALTIGE KOLLOIDALE WÄSSRIGE ORGANOPOLYSILOXANDISPERSIONEN UND DEREN VERWENDUNG**
COLLOIDAL AQUEOUS ORGANOPOLYSILOXANE DISPERSIONS WHICH CONTAIN BINDERS AND THE USE THEREOF
DISPERSIONS AQUEUSES COLLOÏDALES DE POLYSILOXANE ORGANIQUE CONTENANT UN LIANT ET LEUR UTILISATION

(30) Priorität: 10.03.2008 DE 102008000585
(43) Veröffentlichungstag der Anmeldung: 24.11.2010
(73) Patentinhaber: Wacker Chemie AG, 81737 München (DE)
(72) Erfinder: HELLER, Anton, 84359 Simbach (DE); HASHEMZADEH, Abdulmajid, 84508 Burgkirchen (DE)
(74) Vertreter: Deffner-Lehner, Maria
(86) Internationale Anmeldenummer: PCT/EP2009/052480
(87) Internationale Veröffentlichungsnummer: WO 2009/112394

(56) Entgegenhaltungen:
- WO-A-2004/065437
- WO-A-2004/104093
- DE-A1-102005 054 913
- JP-A- 2001 172 545

## Beschreibung

Die Erfindung betrifft binderhaltige kolloidale wässrige Organopolysiloxandispersionen und deren Verwendung zur Behandlung von faserartigen und folienartigen Substraten, insbesondere faserartige Substrate natürlicher und/oder synthetischer Herkunft, besonders bevorzugt textile Bodenbeläge, wie Teppiche und Teppichböden.

Organopolysiloxanhydrosole sind hinlänglich bekannt und Verfahren zu deren Herstellung werden beispielsweise in US 3,433,780, US 4,857,582 (korrespondierende DE 37 17 075 A1) und US 5,281,657 (korrespondierende EP 492 377 A2) beschrieben.

Auch Verwendungen von Organopolysiloxanhydrosolen als Imprägnier- und Beschichtungsmittel sind bekannt. So wird in DE 1 594 985 A die Verwendung zur Behandlung von natürlichen und synthetischen Fasermaterialien beansprucht. Im Speziellen wird beschrieben, dass Teppichwaren nach Imprägnierung mit kolloidalen Suspensionen von Organosilsesquioxanen verbesserte Trockenschmutzabweisung zeigen.

In DE 30 04 824 A1 werden kolloidale Suspensionen von Organosilsesquioxanen in Verbindung mit Kieselsäurehydrosolen zur Polstabilisierung von textilen Materialien ausgewählt. Filme aus Organosilsesquioxanen erweisen sich allerdings als hart und spröde, d.h. Überzüge von Organosilsesquioxanen auf flexibel biegbaren und knitterbaren Substraten sind leicht brüchig und lassen sich in partikulärer Form bei mechanischer Beanspruchung leicht ablösen.

Deswegen werden Organopolysilsesquioxane in der Regel zusammen mit Bindermaterialien eingesetzt. Aus Gründen der wasser- und ölabweisenden Eigenschaften handelt es sich bei den Bindern im textilen Anwendungsbereich zumeist um fluorcarbonhaltige Systeme. US 6,225,403 bezieht sich auf eine Zusammensetzung und Methode zur Behandlung textiler Substrate, um diesen öl-, wasser- und schmutzabweisende Eigenschaften zu verleihen. Dazu werden weniger als 1% Fluorcarbonharze zusammen mit etwa bis zu 10% Organosilsesquioxan-Copolymer-Partikel in Form eines Hydrosols verwendet. Solche Mischungsverhältnisse lassen keine ausreichende Haftung auf dem Substrat erwarten. Vielfach existiert heute aufgrund der Umweltdiskussion und der möglichen Persistenz von Fluorcarbon im menschlichen Körper der Wunsch nach Bindersystemen, die keinen Perfluorkohlenwasserstoff enthalten.

Fluorcarbonfreie Bindersysteme für Organosilsesquioxane sind ebenfalls vielfach in der Patentliteratur zu finden. Beispielsweise wird in US 2003/0099844 A1 eine Beschichtungszusammensetzung zur Erzeugung eines isolierenden Films beschrieben, die Alkoxysilane und/oder deren Hydrolysate, ein organisches Polymer, Wasser, Alkohol und gegebenenfalls einen organischen Lösevermittler umfasst. Das organische Polymer kann u. a. ein Polyvinylalkohol oder Polyvinylester sein. Polyvinylalkohol in der Anwendung als Schutzkolloid zur Stabilisierung von Organopolysiloxanhydrosolen wird auch in der oben genannten US 5,281,657 (korrespondierende EP 492 377 A2) erwähnt.

In "Preparation and properties of poly(vinyl alcohol)/silica nanocomposites derived from copolymerisation of vinyl silica nanoparticles and vinyl acetate", Xin Jia et al., European Polymer Journal 43 (2007), Seiten 1123 - 1131 ist die Herstellung von Nanokompositen beschrieben. Die Synthese verläuft hierbei über den Weg einer radikalischen in-situ Copolymerisation von vinylhaltigen Kieselsäuren mit Vinylacetat. Nach anschließender Verseifung bilden sich verfilmbare Polyvinylalkohole, die durch den Gehalt an kovalent gebundenen Siliconpartikeln verbesserte mechanische Stabilität und Temperaturbeständigkeit aufweisen. Der Anteil an Kieselsäurepartikel in den Nanokompositen beträgt bis zu max. 4 Gew.-%. Schmutzabweisende Eigenschaften sind bei einer Beschichtung mit derartigen Materialien nicht zu erwarten.

Silanhaltige organische Polymere kennt man auch aus der Literatur. Meist werden sie über die radikalische Copolymerisation olefinischer organischer Monomere mit olefinisch funktionalisierten Silanen erzeugt. Insbesondere Vinylacetat- oder Vinylalkoholcopolymere lassen sich auf diesem Weg herstellen. Beispiele dafür finden sich in EP 76 490 A1, US 2004/0014857 A (korrespondierende EP 1 382 621 A1) und DE 10 2005 054 913 A1.

Beschichtungen mit silanhaltigen Vinylacetat- oder Vinylalkoholcopolymeren zeigen eine gute Filmqualität und Substrathaftung, allerdings keine schmutzabweisenden Eigenschaften, wie man sie bei Überzügen aus Organopolysiloxanhydrosolen kennt.

Organopolysiloxanhydrosole mit geeigneten fluorcarbonfreien organischen Bindern zu kombinieren, um bei guter Filmqualität gute schmutzabweisende Effekte auf fasrigen Substraten zu bekommen, ist aber problematisch. In der Praxis zeigt sich nämlich, dass nur wenige organische Binderformulierungen mit Organopolysiloxanhydrosolen verträglich sind, d.h. zu keiner Gelbildung führen. Für gute Filmqualität und Haftung des Organopolysiloxanhydrosols muss dann so viel Binder zugesetzt werden, dass keine oder stark beeinträchtigte schmutzabweisende Effekte zu sehen sind.

Aufgabe der vorliegenden Erfindung ist es, eine stabile, fluorcarbonfreie und filmbildende Zusammensetzung auf der Basis von kolloidalen wässrigen Organopolysiloxandispersionen bereitzustellen, die eine gute Haftung auf faserigen oder folienartigen Substraten, insbesondere auf textilen Bodenbelägen, wie Teppichen und Teppichböden, ergibt und gleichzeitig die durch die Organopolysiloxankomponente bedingte Schmutzabweisung in weitgehend unveränderter Form erhalten bleibt. Diese Aufgabe wird durch die folgende Erfindung gelöst.

Gegenstand der Erfindung sind binderhaltige kolloidale wässrige Dispersionen (B) enthaltend
(a) Organopolysiloxane aus Einheiten der allgemeinen Formel

   R¹ₓSi(OR²)_{y}O_{(4-x-y)/2} (I),

   wobei x 0, 1, 2 oder 3 und y 0, 1 oder 2 ist,
      mit der Maßgabe, dass die Summe x+y≤3 ist,
      R¹ gleich oder verschieden ist und einen SiC-gebundenen einwertigen Kohlenwasserstoffrest mit 1 bis 18 Kohlenstoffatom(en) je Rest, der gegebenenfalls gegenüber Wasser inerte Substituenten aufweisen kann, bedeutet,
      R² gleich oder verschieden sein kann und ein Wasserstoffatom oder einen Kohlenwasserstoffrest mit 1 bis 18 Kohlenstoffatom(en) je Rest, der durch ein oder mehrere voneinander separate Sauerstoffatom unterbrochen sein kann, oder einen Rest der Formel -COCH₃, -COC₂H₅ oder -CH₂CH₂OH bedeutet,
(b) wasserlösliche oder selbstdispergierende silanhaltige Polyvinylalkohle und/oder Polyvinylester und/oder Copolymerisate mit der Maßgabe, dass mehr als 50 Mol-% voll- oder teilverseifte Vinylestereinheiten enthalten sind, wobei mindestens eine der Monomereinheiten ein gebundenes Silan enthält, mit der Maßgabe, dass bei der Herstellung von (b) als Silane solche der allgemeinen Formel

   R³SiR⁴ₐ(OR⁵)₃₋ₐ,

   wobei a = 0, 1 oder 2 ist und R³ die Bedeutung CH₂=CR⁶-(CH₂)₀₋₃- oder CH₂=CR⁶CO₂(CH₂)₁₋₃ hat, R⁴ die Bedeutung C₁- bis C₃-Alkylrest, C₁- bis C₃-Alkoxyrest oder Halogen hat, R⁵ ein unverzweigter oder verzweigter, gegebenenfalls substituierter Alkylrest mit 1 bis 12 C-Atomen oder ein Acylrest mit 2 bis 12 C-Atomen ist, wobei R⁵ gegebenenfalls durch eine Ethergruppe unterbrochen sein kann, und R⁶ für H oder CH₃ steht,
   oder solche der allgemeinen Formel

   CH₂=CR⁷-CO-NR⁸R⁹-SiR¹⁰ₘ-(R¹¹)₃₋ₘ,

   wobei m = 0 bis 2, R⁷ entweder H oder eine Methyl-Gruppe ist, R⁸ H oder eine Alkyl-Gruppe mit 1 bis 5 C-Atomen ist, R⁹ eine Alkylen-Gruppe mit 1 bis 5 C-Atomen oder eine bivalente organische Gruppe in welcher die Kohlenstoffkette durch ein O- oder N-Atom unterbrochen wird, ist, R¹⁰ eine Alkyl-Gruppe mit 1 bis 5 C-Atomen ist, R¹¹ eine Alkoxy-Gruppe mit 1 bis 40 C-Atomen ist, welche mit weiteren Heterocyclen substituiert sein können, eingesetzt werden,
(c) gegebenenfalls oberflächenaktiver Verbindungen, wie Emulgatoren und
(d) Wasser.

Die erfindungsgemäßen kolloidalen wässrigen Dispersionen (B) können gegebenenfalls (e) weitere wassermischbare Zusätze enthalten.

Vorzugsweise enthalten die binderhaltigen kolloidalen wässrigen Dispersionen (B) die Komponenten (a) bis (e) in Mengen von vorzugsweise
100 Gewichtsteile Komponente (a),
0,1 bis 70 Gewichtsteile, bevorzugt 0,5 bis 40 Gewichtsteile, besonders bevorzugt 1,0 bis 20 Gewichtsteile, Komponente (b), 0 bis 70 Gewichtsteile, bevorzugt 0,1 bis 70 Gewichtsteile, besonders bevorzugt 1,0 bis 20 Gewichtsteile, Komponente (c), 50 bis 10 000 Gewichtsteile, bevorzugt 100 bis 3000 Gewichtsteile, Komponente (d) und gegebenenfalls
0 bis 20 Gewichtsteile, bevorzugt 0,0001 bis 20 Gewichtsteile, Komponente (e).

Gegenstand der Erfindung ist weiterhin ein Verfahren zur Herstellung von binderhaltigen kolloidalen wässrigen Dispersionen (B) durch Vermischen von kolloidalen wässrigen Organopolysiloxandispersionen (A) enthaltend
(a) Organopolysiloxanen aus Einheiten der Formel (I)
(c) gegebenenfalls oberflächenaktive Verbindungen, wie Emulgatoren, und
(d) Wasser
   mit
(b) wasserlöslichen oder selbstdispergierenden silanhaltigen Polyvinylalkoholen und/oder Polyvinylacetaten und/oder deren Copolymerisaten mit der Maßgabe, dass mehr als 50 Mol-% voll- oder teilverseifte Vinylestereinheiten enthalten sind, wobei mindestens eine der Monomereinheiten ein gebundenes Silan enthält, mit der Maßgabe, dass bei der Herstellung von (b) als Silane solche der allgemeinen Formel
R³SiR⁴ₐ(OR⁵)₃₋ₐ,

wobei a = 0, 1 oder 2 ist und R³ die Bedeutung CH₂=CR⁶(CH₂)₀₋₃- oder CH₂=CR⁶CO₂(CH₂)₁₋₃- hat, R⁴ die Bedeutung C₁- bis C₃-Alkylrest, C₁- bis C₃-Alkoxyrest oder Halogen hat, R⁵ ein unverzweigter oder verzweigter, gegebenenfalls substituierter Alkylrest mit 1 bis 12 C-Atomen oder ein Acylrest mit 2 bis 12 C-Atomen ist, wobei R⁵ gegebenenfalls durch eine Ethergruppe unterbrochen sein kann, und R⁶ für H oder CH₃ steht,
oder solche der allgemeinen Formel

CH₂=CR⁷-CO-NR⁸-R⁹-SiR¹⁰ₘ-(R¹¹)₃₋ₘ,

wobei m = 0 bis 2, R⁷ entweder H oder eine Methyl-Gruppe ist, R⁸ H oder eine Alkyl-Gruppe mit 1 bis 5 C-Atomen ist, R⁹ eine Alkylen-Gruppe mit 1 bis 5 C-Atomen oder eine bivalente organische Gruppe in welcher die Kohlenstoffkette durch ein O- oder N-Atom unterbrochen wird, ist, R¹⁰ eine Alkyl-Gruppe mit 1 bis 5 C-Atomen ist, R¹¹ eine Alkoxy-Gruppe mit 1 bis 40 C-Atomen ist, welche mit weiteren Heterocyclen substituiert sein können,
eingesetzt werden.

Gegenstand der Erfindung ist weiterhin ein Verfahren zur Behandlung von faserartigen und folienartigen Substraten, vorzugsweise faserartige Substrate natürlicher und/oder synthetischer Herkunft, bevorzugt textile Bodenbeläge, besonders bevorzugt Teppiche und Teppichböden,
mit binderhaltigen kolloidalen wässrigen Dispersionen (B) enthaltend
(a) Organopolysiloxane aus Einheiten der allgemeinen Formel

   R¹ₓSi(OR²)_{y}O_{(4-x-y)/2} (I),

   wobei x 0, 1, 2 oder 3 und y 0, 1 oder 2 ist,
   mit der Maßgabe, dass die Summe x+y≤3 ist,
   R¹ gleich oder verschieden ist und einen SiC-gebundenen einwertigen Kohlenwasserstoffrest mit 1 bis 18 Kohlenstoffatom(en) je Rest, der gegebenenfalls gegenüber Wasser inerte Substituenten aufweisen kann, bedeutet,
   R² gleich oder verschieden sein kann und ein Wasserstoffatom oder einen Kohlenwasserstoffrest mit 1 bis 18 Kohlenstoffatom(en) je Rest, der durch ein oder mehrere voneinander separate Sauerstoffatom(e) unterbrochen sein kann, oder einen Rest der Formel
   -COCH₃, -COC₂H₅ oder -CH₂CH₂OH bedeutet,
(b) wasserlösliche oder selbstdispergierende silanhaltige Polyvinylalkohle und/oder Polyvinylester und/oder deren Copolymerisate mit der Maßgabe, dass mehr als 50 Mol-% voll- oder teilverseifte Vinylestereinheiten enthalten sind, wobei mindestens eine der Monomereinheiten ein gebundenes Silan enthält, mit der Maßgabe, dass bei der Herstellung von (b) als Silane solche der allgemeinen Formel

   R³SiR⁴ₐ(OR⁵)₃₋ₐ,

   wobei a = 0, 1 oder 2 ist und R³ die Bedeutung CH₂=CR⁶-(CH₂₎₀₋₃₋ oder CH₂=CR⁶CO₂(CH₂)₁₋₃- hat, R⁴ die Bedeutung C₁- bis C₃-Alkylrest, C₁- bis C₃-Alkoxyrest oder Halogen hat, R⁵ ein unverzweigter oder verzweigter, gegebenenfalls substituierter Alkylrest mit 1 bis 12 C-Atomen oder ein Acylrest mit 2 bis 12 C-Atomen ist, wobei R⁵ gegebenenfalls durch eine Ethergruppe unterbrochen sein kann, und R⁶ für H oder CH₃ steht,
   oder solche der allgemeinen Formel

   CH₂=CR⁷-CO-NR⁸-R⁹-SiR¹⁰ₘ-(R¹¹)₃₋ₘ,

   wobei m = 0 bis 2, R⁷ entweder H oder eine Methyl-Gruppe ist, R⁸ H oder eine Alkyl-Gruppe mit 1 bis 5 C-Atomen ist, R⁹ eine Alkylen-Gruppe mit 1 bis 5 C-Atomen oder eine bivalente organische Gruppe in welcher die Kohlenstoffkette durch ein O- oder N-Atom unterbrochen wird, ist, R¹⁰ eine Alkyl-Gruppe mit 1 bis 5 C-Atomen ist, R¹¹ eine Alkoxy-Gruppe mit 1 bis 40 C-Atomen ist, welche mit weiteren Heterocyclen substituiert sein können,
   eingesetzt werden,
(c) gegebenenfalls oberflächenaktive Verbindungen, wie Emulgatoren,
(d) Wasser.

Beispiele für Kohlenwasserstoffreste R¹ sind Alkylreste, wie der Methyl-, Ethyl-, n-Propyl-, Isopropyl-, n-Butyl-, sec.-Butyl-, Amyl-, Hexyl-, β-Ethylhexyl und Heptylrest; Alkenylreste, wie der Vinyl- und Allylrest und Butenylreste; Alkinylreste; Cycloalkylreste, wie der Cyclobutyl- und Cyclohexylrest und Methylcyclohexylreste; Arylreste, wie der Phenylrest; Alkarylreste, wie Tolylreste; und Aralkylreste, wie der Benzylrest. Besonders bevorzugt sind der Methyl-, Vinyl- und Phenylrest.

Beispiele für substituierte Kohlenwasserstoffreste R¹ sind halogenierte Kohlenwasserstoffreste; wie Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest; und Reste der Formel HOCH₂CH (OH) CH₂SCH₂CH₂-, HOCH₂CH₂OCH₂- und

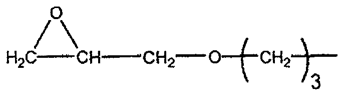

Vorzugsweise ist R² ein Wasserstoffatom oder gleiche oder verschiedene Alkyl- oder Alkoxyalkylenreste mit 1 bis 4 Kohlenstoffatom(en) je Rest.

Beispiele für Kohlenwasserstoffreste R² sind Alkylreste, wie der Methyl-, Ethyl-, n-Propyl-, Isopropyl-, n-Butyl-, sec.-Butyl- und tert.- Butylrest; und Alkoxyalkylenreste, wie der Methoxyethylen- und Ethoxyethylenrest. Besonders bevorzugt sind der Methyl- und Ethylrest.

Vorzugsweise ist in Formel (I) x durchschnittlich 1,0 bis 2,0 und y durchschnittlich 0 bis 0,5.

Verfahren zur Herstellung der kolloidalen wässrigen Organopolysiloxandispersionen (A) sind dem Fachmann bekannt und sind in US 3,433,780, US 4,857,582 (korrespondierende DE 37 17 075 A1.) und US 5,281,657 (korrespondierende EP 492 377 A2) beschrieben. Kolloidale wässrige Organopolysiloxandispersionen (A) werden beispielsweise erhalten, indem Organosiliciumverbindungen, wie Silane der Formel R¹ₓSi(OR²)₄₋ₓ (wobei x, R¹ und R² die oben dafür angegebene Bedeutung haben) und/oder deren Teilhydrolysate und ggf. oligomere Organopolysiloxane, mit Wasser in Gegenwart von oberflächenaktiven Verbindungen vermischt und dispergiert werden.

Verfahren zur Herstellung der eingesetzten silanhaltigen Polyvinylalkohole (b) sind dem Fachmann bekannt und sind in US 2004/0014857 A (korrespondierende EP 1 382 621 A1) und DE 10 2005 054 913 A1 beschrieben. Die silanhaltigen Polyvinylalkohole (b) auf Basis von teil- oder vollverseiften Vinylester-Copolymerisaten sind z. B. erhältlich durch radikalische Polymerisation von Vinylestern mit, ethylenisch ungesättigten silanhaltigen Monomeren und ggf. weiteren damit copolymerisierbaren Comonomeren und Verseifung der damit erhaltenen Polymerisate. Silanhaltige Polyvinylalkohole (b) sind z. B. auch erhältlich durch radikalische Pfropfpolymerisation von Vinylalkoholpolymerisaten mit ethylenisch ungesättigten silanhaltigen Monomeren.

Geeignete Silan-haltige Polyvinylalkohole (b) sind vollverseifte oder teilverseifte Vinylester-Polymerisate mit einem Hydrolysegrad von 75 bis 100 Mol% und einem Anteil an Silan-haltigen Comonomereinheiten von 0,01 bis 10 Mol%. Die vollverseiften Vinylester-Polymerisate haben einen Hydrolysegrad von vorzugsweise 97,5 bis 100 Mol-%, besonders bevorzugt 98 bis 99,5 Mol-%. Die teilverseiften Polyvinylester haben einen Hydrolysegrad von vorzugsweise 80 bis 95 Mol-%, besonders bevorzugt 86 bis 90 Mol-%. Die Höppler-Viskosität (nach DIN 53015 als 4 Gew.-%ige wässrige Lösung) dient als Maß für das Molekulargewicht und für den Polymerisationsgrad der teil- oder vollverseiften, silanisierten Vinylesterpolymerisate, und beträgt vorzugsweise von 2 bis 50 mPa·s bei 25°C.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, Vinylpivalat und Vinylester von alpha-verzweigten Monocarbonsäuren mit 5 bis 13 C-Atomen, beispielsweise VeoVa9^{®} oder VeoVa10^{®} (Handelsnamen der Firma Shell). Besonders bevorzugt ist Vinylacetat.

Bevorzugte 1-Alkylvinylester mit Alkylresten mit 1 bis 6 C-Atomen und von Carbonsäuren mit 1 bis 6 C-Atomen sind 1-Methylvinylacetat, 1-Ethylvinylacetat, sowie 1-Propylvinylacetat.

Neben den Vinylester-Einheiten können gegebenenfalls noch ein oder mehrere Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat; n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer > 50 Mol% im Vinylester-Polymerisat beträgt.

Gegebenenfalls können noch weitere Comonomere in einem Anteil von vorzugsweise 0,1 bis 25 Mol% enthalten sein. Beispiele hierfür sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise N-Vinylformamid, Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

In silanhaltigen Monomeren, in denen 2 oder mehrere R⁷- oder R¹¹- Gruppen vorkommen, können diese identisch oder unterschiedlich sein.

Beispiele für solche (Meth)acrylamido-alkylsilane sind: 3-(Meth)acrylamido-propyltrimethoxysilane, 3-(Meth)acrylamido-propyltriethoxysilane, 3-(Meth)acrylamido-propyltri(betamethoxyethoxy)silane, 2-(Meth)acrylamido-2-methylpropyltrimethoxysilane, 2-(Meth)acrylamido-2-methylethyltrimethoxysilane, N-(2-(Meth)acrylamido-ethyl)aminopropyltrimethoxysilane, 3-(Meth)acrylamido-propyltriacetoxysilane, 2-(Meth)acrylamido-ethyltrimethoxysilane, 1-(Meth)acrylamido-methyldimethoxysilane, 3- (Meth) acrylamido-propyldimethylmethoxysilane, 3-(N-Methyl-(Meth)acrylamido)-propyltrimethoxysilane, 3-((Meth)acrylamidomethoxy)-3-hydroxypropyltrimethoxysilane, 3-((Meth)acrylamidomethoxy)-propyltrimethoxysilane, N,N-Dimethyl-N-trimethoxysilylpropyl-3-(Meth)acrylamido-propylammoniumchlorid und N-N-Dimethyl-N-trimethoxysilylpropyl-2-(Meth)acrylamido-2-methylpropylammonium chlorid.

Bevorzugte ethylenisch ungesättigte,silanhaltige Monomere sind gamma-Acryl- bzw. gamma-Methacryloxypropyltri(alkoxy)silane, alpha-Methacryloxymethyltri(alkoxy)silane, gamma-Methacryloxypropylmethyldi(alkoxy)silane; Vinylsilane wie Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan; Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als Silane werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan; Methacryloxypropyl-tris(2-methoxyethoxy) silan, 3-Methacryloxypropyltrimethoxysilan, 3-Methacryloxypropylmethyldimethoxysilan und Methacryloxymethyltrimethoxysilan sowie deren Gemische.

Die gegebenenfalls zur Herstellung der erfindungsgemäßen Dispersionen (B) benötigten oberflächenaktiven Verbindungen (c) sind Emulgatoren wie beispielsweise Carbonsäuren mit 9 bis 20 C-Atomen; aliphatisch substituierte Benzolsulfonsäuren mit mindestens 6 C-Atomen in den aliphatischen Substituenten; aliphatisch-substituierte Naphthalinsulfonsäuren mit mindestens 4 C-Atomen in den aliphatischen Substituenten; aliphatische Sulfonsäuren mit mindestens 6 C-Atomen in den aliphatischen Substituenten; Silylalkylsulfonsäuren mit mindestens 6 C-Atomen in den Alkylsubstituenten; aliphatisch-substituierte Diphenylethersulfonsäuren mit mindestens 6 C-Atomen in den aliphatischen Substituenten; Alkylhydrogensulfate mit mindestens 6 C-Atomen in den Alkylsubstituenten; Alkyl- und Alkarylethersulfate mit mindestens 6 C-Atomen im hydrophoben Rest und 1 bis 40 Ethylenoxid(EO)- bzw. Propylenoxid(PO)-einheiten; Tauride; Ester und Halbester der Sulfobernsteinsäure mit einwertigen Alkoholen oder Alkylphenolen mit 4 bis 15 C-Atomen, gegebenenfalls mit 1 bis 40 EO-Einheiten ethoxyliert; sowie Alkali- und Ammoniumsalze der genannten Säuren; Phosphorsäureteilester und deren Alkali- und Ammoniumsalze, besonders Alkyl- und Alkarylphosphate mit 8 bis 20 C-Atomen im organischen Rest; Alkylether- bzw. Alkaryletherphosphate mit 8 bis 20 C-Atomen im Alkyl- bzw. Alkarylrest und 1 bis 40 EO-Einheiten; Salze von primären, sekundären und tertiären Fettaminen mit 8 bis 24 C-Atomen mit Essigsäure, Schwefelsäure, Salzsäure und Phosphorsäuren; quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate; quaternäre Ammoniumhydroxide; Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate; Alkylpolyglycolether, vorzugsweise solche mit 3 bis 40 EO-Einheiten und Alkylresten von 8 bis 20 C-Atomen, Alkylarylpolyglycolether, vorzugsweise solche mit 5 bis 40 EO-Einheiten und 8 bis 20 C-Atomen in den Alkyl- und Arylresten; Ethylenoxid/Propylenoxid(EO/PO)-Blockcopolymere, vorzugsweise solche mit 8 bis 40 EO- bzw. PO-Einheiten; Additionsprodukte von Alkylaminen mit Alkylresten von 8 bis 22 C-Atomen mit Ethylenoxid oder Propylenoxid; Alkylpolyglykoside der allgemeinen Formel R*-O-Zₒ, worin R* einen linearen oder verzweigten, gesättigten oder ungesättigten Alkylrest mit im Mittel 8-24 C-Atomen und Zₒ einen Oligoglykosidrest mit im Mittel o = 1 - 10 Hexose- oder Pentoseeinheiten oder Gemischen davon bedeuten; Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen; polare Gruppen, enthaltend insbesondere die Elemente O, N, C, S, P, enthaltende lineare Organo(poly)siloxane, insbesondere solche mit Alkoxygruppen mit bis zu 24 C-Atomen und/oder bis zu 40 Ethylenoxid (EO) und/oder Propylenoxid(PO)-Gruppen; langkettig substituierte Aminosäuren, wie N-Alkyl-di(aminoethyl-)glycin oder N-Alkyl-2-aminopropionsäuresalze; Betaine, wie N-(3-Acylamidopropyl)-N,N-dimethylammoniumsalze mit einem C₈-C₁₈-Acylrest und Alkylimidazolium-Betaine.

Bevorzugt als oberflächenaktive Verbindungen sind kationische oder anionische Emulgatoren.

Alle genannten Säuren können als solche oder gegebenenfalls im Gemisch mit ihren Salzen verwendet werden.

Wenn anionische Emulgatoren eingesetzt werden, ist es vorteilhaft, solche zu verwenden, deren aliphatische Substituenten mindestens 8 und insbesondere 12 C-Atome enthalten. Spezielle Beispiele für aliphatische Substituenten sind Octyl-, Decyl-, Dodecyl-, Cetyl-, Stearyl-, Myricyl-, Oleyl-, Nonenyl-, Octinyl-, Phythyl- und Pentadecadienylreste. Als anionische Emulgatoren sind aliphatisch substituierte Benzolsulfonsäuren bevorzugt

Wenn kationische Emulgatoren benutzt werden, ist es vorteilhaft, Halogenide und insbesondere Chloride und Bromide zu verwenden.

Bei der Herstellung der kolloidalen wässrigen Organopolysiloxandispersionen (A) kann die Menge des eingesetzten Emulgators sehr gering sein. Der Emulgator wird vorzugsweise in Mengen von 0,1 bis 70,0 Gewichtsprozent, besonders bevorzugt in Mengen von 1,0 bis 20,0 Gew.-%, jeweils bezogen auf das Gewicht der bei der Herstellung der kolloidalen wässrigen Organopolysiloxandispersionen (A) eingesetzten Organosiliciumverbindungen, verwendet.

Bei der Herstellung der kolloidalen wässrigen Organopolysiloxandispersionen (A) kann der Emulgator sowohl zusammen mit dem Wasser als auch zusammen mit den Organosiliciumverbindungen zugegeben werden.

Bei vielen Anwendungen können aber auswaschbare oder zur Diffusion fähige, an Grenzflächen sich anreichernde Emulgatoren störend wirken. Es können daher anstelle der oben genannten Emulgatoren vorteilhafter Additionssalze von Essigsäure an 3-Aminopropyltrimethoxysilan oder 3-Aminopropyltriethoxysilan, besonders vorteilhaft Additionssalze von Essigsäure an N-(2-Aminoethyl)-3-aminopropyltrimethoxysilan oder N-(2-Aminoethyl)-3-aminopropyltriethoxysilan verwendet werden, die vorzugsweise zusammen mit den eingesetzten Organosiliciumverbindungen hydrolysiert und kondensiert werden und dabei in das Organopolysiloxangerüst mit eingebaut werden.

Beispiele für wassermischbare Zusätze (e), die in den erfindungsgemäßen kolloidalen wässrigen Dispersionen (B) enthalten sein können, sind Säuren, wie z.B. Ameisensäure, Essigsäure, Propionsäure, Phosphorsäure, Salzsäure, Schwefelsäure oder Basen, wie z.B. Triethylamin, Triethanolamin, Trioctylamin, wässrige Ammoniaklösung, Lithiumhydroxid, Natriumhydroxid, Kaliumhydroxid, Cäsiumhydroxid, ferner Ethylen- oder Polyethylenglykol, 1,2-Propandiol, 1,3-Propandiol, Polypropylenglykol, Diethylenglykolmonobutylether oder Glycerin. Desweiteren können Dispersionen oder Emulsionen als weitere Stoffe (e) eingesetzt werden, z.B. im Handel erhältliche Dispersionen, wie z.B. Styrol-Butadien-Latex, Acryl-, Vinyl-, Polyurethan-, oder Polyethylendispersionen sowie Emulsionen natürlicher oder synthetischer Öle, Harze oder Wachse, wie z.B. Carnaubawachs-, Bienenwachs-, Wollwachs-, Aloe Vera-, Vitamin E-, Paraffinöl-, unreaktive Siliconöl-, unreaktive Siliconharz-, Jojobaöl-, Reisöl-, Calendulaöl-, Teebaumöl-, Rosenöl- oder Melissenöl-Emulsionen. Ferner können als weitere Stoffe handelsübliche Konservierungsmittel für Dispersionen wie z.B. Isothiazolinone oder Parabene, bzw. deren wässrigen Formulierungen, zugesetzt werden.

Die silanhaltigen Polyvinylalkohole/-ester (b) können pur, d.h. in Substanz, oder als wässrige Lösung mit der fertig hergestellten Organopolysiloxandispersion (A) abgemischt werden oder mit dem Wasser (d) und gegebenenfalls zusammen mit oberflächenaktiven Verbindungen (c) vor der Silandosierung (bei der Herstellung der Organopolysiloxandispersion (A)) vorgelegt werden.

Bevorzugt eingesetzt werden wässrige Lösungen der silanhaltigen Polyvinylalkohole/-ester (b), besonders bevorzugt Lösungen von (b) im Konzentrationsbereich von 1 bis 30 Gew.-%.

Werden die silanhaltigen Polyvinylalkohole/-ester (b) mit der fertig hergestellten Organopolysiloxandispersion (A) gemischt, legt man letztere bevorzugt in einem Temperaturbereich von 10 bis 95°C, besonders bevorzugt bei 50 bis 90°C, vor und dosiert silanhaltige Polyvinylalkohole/-ester (b) zu.

Werden die silanhaltigen Polyvinylalkohole/-ester (b) vor der Herstellung der Organopolysiloxandispersion (A) zusammen mit dem Wasser (d) und gegebenenfalls oberflächenaktiven Verbindungen (c) vorgelegt, dosiert man die zu dispergierenden Organosiliciumverbindungen bevorzugt in einem Temperaturbereich von 1 bis 95°C, besonders bevorzugt im Bereich von 30 bis 90°C, zu.

Werden wassermischbare Zusätze (e) mitverwendet, können die Zusätze (e) vor, gleichzeitig oder nach dem Vermischen der kolloidalen wässrigen Organopolysiloxandispersion (A) mit der Komponente (b) zugegeben werden.

Die erfindungsgemäße binderhaltige kolloidale wässrige Dispersion (B) kann zur Behandlung von beliebigem Fasermaterial natürlicher und synthetischer Herkunft angewendet werden. Grundsätzlich wird die Rutschsicherheit, der Mattglanz und/oder der Widerstand gegen trockene Verschmutzung bei allen Fasermaterialien verbessert.

Die binderhaltigen kolloidalen wässrigen Dispersionen (B) werden vorzugsweise auf das Substrat aufgetragen und trocknen gelassen, bevorzugt bei einer Temperatur von 10 bis 200°C.

Fasermaterialien, die der Behandlung mit der erfindungsgemäßen binderhaltigen kolloidalen wässrigen Dispersion (B) unterzogen werden, sind beispielsweise solche aus Wolle, Haare, Jute, Flachs, Baumwolle, regenerierte Zellulosefasern, Rayon, Nylon, Acrylaten, Polyacrylnitril, Polyvinylidenchlorid, Polyester, Celluloseacetat, Glas und Mischungen oder Gemengen derselben. Auch auf Leder oder Kunstleder kann die Dispersion aufgetragen werden.

Die erfindungsgemäße binderhaltige kolloidale wässrige Dispersion (B) kann auf das Fasermaterial in beliebiger Weise aufgebracht werden. So können die Fasern beispielsweise in die Dispersion eingetaucht oder durchgezogen werden, oder die Dispersion kann auf die Fasern durch Streichen, Bürsten, Sprengen, Schäumen oder Sprühen aufgetragen werden. Bevorzugt sind der Schaum-, Foulard-, und Pflatschauftrag, sowie der Auftrag über das Ausziehverfahren.

Für die Anwendung kann die erfindungsgemäße kolloidale wässrige Dispersion beliebig mit Wasser verdünnt werden; bevorzugt werden Konzentrationen im Bereich von 0,05 bis 10,0 Gewichtsprozent Organosiliciumverbindungen jeweils bezogen auf das Gewicht der verdünnten wässrigen Organopolysiloxandispersion eingesetzt.

Weiterhin kann die erfindungsgemäße kolloidale wässrige Dispersion (B) zusammen mit einem Reinigungsmittel formuliert aufgetragen werden. Das ist beispielsweise besonders nützlich zum Auftragen der Dispersion auf Läufer oder Teppiche in Wohn- oder Büroräumen, da hierdurch sowohl eine Reinigung als auch eine Erhöhung des Widerstandes gegen trockene Verschmutzung in einem Arbeitsgang möglich ist.

Allgemein ist es vorteilhaft, für den Auftrag die Konzentration der Dispersion so zu wählen, dass die enthaltenen Organopolysiloxane in Mengen von 0,5 bis 15 g pro m² Fasermaterial vorliegen. Besonders bevorzugt sind Mengen im Bereich von 1 bis 10 g pro m².

Nach dem Aufbringen der erfindungsgemäßen bindehaltigen kolloidalen wässrigen Dispersion (B) wird das Fasermaterial getrocknet. Der Trockenvorgang kann durch beliebige Maßnahmen erfolgen. Die einfachste Methode besteht beispielsweise darin, dass das behandelte Fasermaterial der Luft ausgesetzt wird, wobei das Wasser verdunstet. Der Trockenvorgang kann aber auch durch Darüberblasen von Luft oder anderen Gasen, insbesondere erhitzten Gasen, beschleunigt werden. Der Trockenvorgang kann aber auch in einem Ofen oder Infrarot-Trockner bewerkstelligt werden. Die Trocknungsbedingungen hängen hier jeweils von der Art, Menge und Dichte der Fasermaterialien ab. Kurzflorige Polyamidteppiche werden beispielsweise vorteilhaft für 10 bis 15 Minuten zwischen 100 und 130°C getrocknet.

### Herstellbeispiele:

### Herstellung eines Methylsilsesquioxan-Hydrosols ohne Binder, nicht erfindungsgemäß:

### Vergleichsprodukt 1:

1078 g vollentsalztes Wasser, 1,7 g Kaliumhydroxid (20 % in Methanol), und 20,8 g N-Alkyl(C12-18)-N,N-dimethyl-N-benzylammoniumchlorid (50% in Wasser) werden vorgelegt und auf 50°C aufgeheizt. Anschließend werden 294 g Trimethoxymethylsilan mit einer Dosierrate von 30 Gramm pro Stunde unter Rühren zudosiert. Nach Zugabe von etwa der halben Menge Silan wird ein Vakuum von 300 hPa angelegt, um freiwerdendes Methanol abzuziehen. Im Anschluss an die Silandosierung wird Normaldruck eingestellt und 157 g vollentsalztes Wasser zugegeben. Die Mischung wird auf 90°C aufgeheizt und weiterdestilliert bis eine Destillationsmenge von 500 g erreicht ist. Das Produkt wird auf Raumtemperatur abgekühlt und über ein 75 µm Polyamid-Filtergewebe filtriert. Das Hydrosol ist eine dünnflüssige leicht opaleszente Flüssigkeit mit einer durchschnittlichen Partikelgröße von 41 nm.

### Vergleichsprodukt 2:

1182 g vollentsalztes Wasser und 11,3 g 4-C10-13-sec-Alkylbenzolsulfonsäure werden vorgelegt und auf 50°C aufgeheizt. Anschließend werden 228 g Trimethoxymethylsilan mit einer Dosierrate von 30 Gramm pro Stunde unter Rühren zudosiert. Nach Zugabe von etwa der halben Menge Silan wird ein Vakuum von 300 hPa angelegt, um freiwerdendes Methanol abzuziehen. Im Anschluss an die Silandosierung wird Normaldruck eingestellt und 770 g vollentsalztes Wasserzugegeben. Die Mischung wird auf 90°C aufgeheizt und weiterdestilliert bis eine Destillationsmenge von 350 g erreicht ist. Das Hydrosol wird auf 80°C abgekühlt und mit wässriger Ammoniaklösung (25%) auf pH 7 eingestellt. Das Produkt wird auf Raumtemperatur abgekühlt und über ein 75 µm Polyamid-Filtergewebe filtriert. Das Hydrosol ist eine dünne opaleszente Flüssigkeit mit einer durchschnittlichen Partikelgröße von 79 nm.

### Herstellung eines Methylsilsesquioxan-Hydrosols mit nicht silanhaltigem Polyvinylalkohol, nicht erfindungsgemäß, nicht stabil:

### Vergleichsprodukt 3:

1078 g vollentsalztes Wasser, 1,7 g Kaliumhydroxid (20 % in Methanol), 20,8 g N-Alkyl(C12-18)-N,N-dimethyl-N-benzylammoniumchlorid (50% in Wasser) und 81 g einer wässrigen Polyvinylalkohol-Lösung (10%) (POLYVIOL® LL 2870, Firma Wacker Polymers) werden vorgelegt und auf 50°C aufgeheizt. Anschließend werden 294 g Trimethoxymethylsilan mit einer Dosierrate von 30 Gramm pro Stunde unter Rühren zudosiert. Nach Zugabe von etwa der halben Menge Silan wird ein Vakuum von 300 hPa angelegt, um freiwerdendes Methanol abzuziehen. Im Anschluss an die Silandosierung wird Normaldruck eingestellt und 157 g vollentsalztes Wasserzugegeben. Die Mischung wird auf 90°C aufgeheizt und weiterdestilliert. Bei einer Destillatmenge von etwa 150 g bildet sich ein festes Gel, das nicht mehr weiter verarbeitet werden kann.

Herstellung eines nanopartikelhaltigen Poyvinylalkohols über radikalische Polymerisation gemäß Xin Jia et al., European Polymer Journal 43 (2007), Seiten 1123 - 1131, nicht erfindungsgemäß:

### Vergleichsprodukt 4:

### Vorstufe:

### Funktionalisierung der Nanopartikel mit Vinylgruppen.

5,0 g hochdisperse Kieselsäure (spezifische Oberfläche 400 m²/g ; SiOH-Gehalt 2 SiOH / nm²) werden in 60 ml Methanol eingerührt. Diese Mischung wird mit 10 ml Vinyltriethoxysilan versetzt und unter langsamen Rühren dreimal jeweils 30 Minuten im Ultraschallbad dispergiert. Zwischen den Ultraschallbehandlungen wird jeweils 10 Minuten weitergerührt. Danach wird die Dispersion über Blaubandpapier filtriert. Der Filterrückstand wird über 16 Stunden bei 65°C getrocknet und dann in einer Reibschale zerrieben. Das zerriebene Pulver wird im Soxhlet 10 Stunden mit Methanol extrahiert, um Silanrückstände zu entfernen. Anschließend wird die vinylhaltige Kieselsäure über 16 Stunden bei 65°C getrocknet. Der Vinylgehalt der Kieselsäure wird qualitativ über IR-Spektroskopie verfiziert.

### Radikalische Polymerisierung:

3,2 g der Vorstufe werden mit 76,8 g Vinylacetat und 50 ml Methanol vermischt und 30 Minuten im Ultraschallbad dispergiert. Danach wird auf 60 bis 65°C erwärmt und zur Initiierung der Polymerisation mit 0,8 g Benzoylperoxid versetzt. Die Mischung wird 4 Stunden bei 60 bis 65°C gerührt. Anschließend wird mit 240 ml Methanol verdünnt und die Temperatur auf 70 bis 72 °C erhöht. Zur Verseifung werden 16 ml wässrige Natronlauge (25%) zugegeben. Der gefällte Polyvinylalkohol wird abfiltriert und in 400 ml Wasser eindispergiert. Zur Vervollständigung der Verseifung werden weitere 16 ml wässrige Natronlauge zugegeben, wonach die Mischung 6 Stunden bei 70 bis 72°C gerührt wird. Danach wird die Mischung filtriert, um nicht gebundene Kieselsäureanteile zu entfernen. Aus dem klaren Filtrat wird der vollverseifte Polyvinylalkohol mit etwa 400 ml Methanol gefällt. Der Feststoff wird gefiltert, mit wenig Methanol gewaschen und über Nacht bei 60°C getrocknet. Der Kieselsäuregehalt des getrockneten Produkts wird qualitativ über IR-Spektroskopie verifiziert. Das Polymer wird anschließend in der Reibschale zerrieben und bei 90°C zu einer klaren gelblichen 5 % Lösung in Wasser weiterverarbeitet.

Herstellung eines Methylsilsesquioxan-Hydrosols mit fluorcarbonhaltigem Binder, nicht erfindungsgemäß:

### Vergleichsprodukt 5:

In 100 g eines Methylsilsesquioxan-Hydrosols aus Vergleichsbeispiel 1 werden 2,67 g einer 30% Fluorcarbondispersion (NUVA FB fl., Firma Clariant) eingemischt. Es bildet sich eine stabile dünnflüssige milchig weiße Mischung.

Herstellung des silanhaltigen Polyvinylalkohols gemäß DE 10 2005 054 913 A1 (Binder, für sich allein nicht erfindungsgemäß:

### Vergleichsprodukt 6:

In einer thermostatisierten Laborapparatur mit 2,5 Liter Füllvolumen werden unter Stickstoff 1000 g einer 20 %-igen wässrigen Polyvinylalkohollösung (Mowiol 8-88, Firma Kuraray Specialities Europe) vorgelegt und unter Rühren auf 90°C aufgeheizt. Bei dieser Temperatur wird 2 h gerührt und anschließend die Temperatur auf 80°C reduziert und 15 g Vinyltriethoxysilan (Geniosil GF 56, Firma Wacker Chemie) zur Polyvinylalkohollösung zugegeben. Nach 15 min Homogenisierung wird die Reaktion durch die Zugabe von 10 g einer 3 %-igen wässrigen Kaliumperoxodisulfatlösung gestartet. Die Temperatur wird 4 h bei 80°C gehalten und anschließend wird der Ansatz abgekühlt. Es wird eine klare Polymerlösung mit einem Feststoffgehalt von 21 Gew.-% und mit 7,0 Gew.-% Silananteil bezogen auf das Gesamtgewicht der Silan-modifizierten Polyvinylalkohole erhalten.

Herstellung eines Methylsilsesquioxan-Hydrosols mit silanhaltigem Polyvinylalkohol, erfindungsgemäß

### Beispiel 1:

1078 g vollentsalztes Wasser, 1,7 g Kaliumhydroxid (20 % in Methanol), und 20,8 g N-Alkyl(C12-18)-N,N-dimethyl-N-benzylammoniumchlorid (50% in Wasser) werden vorgelegt und auf 50°C aufgeheizt. Anschließend werden 294 g Trimethoxymethylsilan mit einer Dosierrate von 30 Gramm pro Stunde unter Rühren zudosiert. Nach Zugabe von etwa der halben Menge Silan wird ein Vakuum von 300 hPa angelegt, um freiwerdendes Methanol abzuziehen. Im Anschluss an die Silandosierung wird Normaldruck eingestellt und 157 g vollentsalztes Wasser zugegeben. Die Mischung wird auf 90°C aufgeheizt und weiterdestilliert bis eine Destillationsmenge von 500 g erreicht ist. Das Hydrosol wird auf 80°C abgekühlt. Danach werden 44 g des Binders hergestellt gemäß Vergleichsbeispiel 6 mit einer Rate von 1 Gramm pro Minute eingerührt. Das Produkt wird auf Raumtemperatur abgekühlt und über ein 75 µm Polyamid-Filtergewebe filtriert. Das binderhaltige Hydrosol ist eine dünnflüssige opaleszente Flüssigkeit mit einer durchschnittlichen Partikelgröße von 97 nm.

### Beispiel 2:

1078 g vollentsalztes Wasser, 1,7 g Kaliumhydroxid (20 % in Methanol), 20,8 g N-Alkyl(C12-18)-N,N-dimethyl-N-benzylammoniumchlorid (50% in Wasser) und 44 g des Binders hergestellt gemäß Vergleichsbeispiel 6 werden vorgelegt und auf 50°C aufgeheizt. Anschließend werden 294 g Trimethoxymethylsilan mit einer Dosierrate von 30 Gramm pro Stunde unter Rühren zudosiert. Nach Zugabe von etwa der halben Menge Silan wird ein Vakuum von 300 hPa angelegt, um freiwerdendes Methanol abzuziehen. Im Anschluss an die Silandosierung wird Normaldruck eingestellt und 157 g vollentsalztes Wasser zugegeben. Die Mischung wird auf 90°C aufgeheizt und weiterdestilliert bis eine Destillationsmenge von 500 g erreicht ist. Das Produkt wird auf Raumtemperatur abgekühlt und über ein 75 µm Polyamid-Filtergewebe filtriert. Das binderhaltige Hydrosol ist eine dünnflüssige opaleszente Flüssigkeit mit einer durchschnittlichen Partikelgröße von 110 nm.

### Beispiel 3:

1182 g vollentsalztes Wasser und 11,3 g 4-C10-13-sec-Alkylbenzolsulfonsäure werden vorgelegt und auf 50°C aufgeheizt. Anschließend werden 228 g Trimethoxymethylsilan mit einer Dosierrate von 30 Gramm pro Stunde unter Rühren zudosiert. Nach Zugabe von etwa der halben Menge Silan wird ein Vakuum von 300 hPa angelegt, um freiwerdendes Methanol abzuziehen. Im Anschluss an die Silandosierung wird Normaldruck eingestellt und 770 g vollentsalztes Wasserzugegeben. Die Mischung wird auf 90°C aufgeheizt und weiterdestilliert bis eine Destillationsmenge von 350 g erreicht ist. Das Hydrosol wird auf 80°C abgekühlt und mit wässriger Ammoniaklösung (25%) auf pH 7 eingestellt. Danach werden 44 g des Binders hergestellt gemäß Vergleichsbeispiel 6 mit einer Rate von 1 Gramm pro Minute eingerührt. Das Produkt wird auf Raumtemperatur abgekühlt und über ein 75 µm Polyamid-Filtergewebe filtriert. Das binderhaltige Hydrosol ist eine dünnflüssige opaleszente Flüssigkeit mit einer durchschnittlichen Partikelgröße von 90 nm.

### Beispiel 4:

1182 g vollentsalztes Wasser, 11,3 g 4-C10-13-sec-Alkylbenzolsulfonsäure und 44 g des Binders hergestellt gemäß Vergleichsbeispiel 6 werden vorgelegt und auf 50°C aufgeheizt. Anschließend werden 228 g Trimethoxymethylsilan mit einer Dosierrate von 30 Gramm pro Stunde unter Rühren zudosiert. Nach Zugabe von etwa der halben Menge Silan wird ein Vakuum von 300 hPa angelegt, um freiwerdendes Methanol abzuziehen. Im Anschluss an die Silandosierung wird Normaldruck eingestellt und 770 g vollentsalztes Wasser zugegeben. Die Mischung wird auf 90°C aufgeheizt und weiterdestilliert bis eine Destillationsmenge von 350 g erreicht ist. Das Hydrosol wird auf 80°C abgekühlt und mit wässriger Ammoniaklösung (25%) auf pH 7 eingestellt. Danach wird das Produkt wird auf Raumtemperatur abgekühlt und über ein 75 µm Polyamid-Filtergewebe filtriert. Das binderhaltige Hydrosol ist eine dünnflüssige opaleszente Flüssigkeit mit einer durchschnittlichen Partikelgröße von 86 nm.

### Beispiel 5 und Vergleichsversuche:

### a) Beurteilung der Haftung und filmbildenden Eigenschaften auf einer Polyamidfolie:

Produkte aus Beispiel 1 bis 4 und Vergleichsprodukte 1, 2, 4, 5 und 6 werden mit einem Kastenrakel auf eine Polyamidfolie (PA 6, Dicke 80 µm) als Schicht mit einer Dicke von 50 µm aufgezogen. Die Filme werden im Trockenschrank 10 Minuten bei einer Temperatur von 150°C getrocknet und kondensiert. Nach dem Abkühlen wird die Haftung und Festigkeit der Filme qualitativ beurteilt, indem man mit dem Finger einmal kräftig über die Schicht reibt. Die Ergebnisse der Filmbeurteilung sind in der Tabelle zusammengefasst.

### b) Beurteilung der Trockenschutzabweisung auf einem Polyamidteppich:

Ein 15 x 30 cm großes Stück eines Polyamidteppichs wird 1 Minute lang in jeweils 600 Milliliter einer Flotte aus 50 Gramm pro Liter einer Dispersion der Beispiele 1 bis 4 und der Vergleichsprodukte 1, 2, 4, 5 und 6 getaucht und dann am Zweiwalzenfoulard bei 4 bar abgequetscht. Die Flottenaufnahme beträgt dabei zwischen 50 und 60 %. Anschließend werden die Teppichstücke im Trockenschrank 15 Minuten lang bei 150 °C getrocknet und für mindestens 24 Stunden im Klimaraum bei 23°C und 62% Luftfeuchte gelagert. In eine 30 x 40 cm große Kunststofftüte wird jeweils eines der Teppichstücke zusammen mit 6,5 g rußhaltigem Testschmutz (wfk-Teppichpigmentschmutz der Firma wfk Testgewebe GmbH) gegeben und 90 Sekunden lang durchgeschüttelt. Danach wird das Teppichmuster aus der Tüte genommen und 3 Mal im Laborabzug per Hand der nicht gebundene Schmutzanteil abgeschüttelt. Die Teppichstücke werden dann mit einem Farbmeßgerät des Typs CR-200 der Firma Minolta auf den Grad der Anschwärzung vermessen. Jedes Muster wird 9 Mal an verschiedenen Stellen geprüft. Die Messung erfolgt mit der Einstellung auf die Normlichtart CIE-D65 und das Farbsystem in Yxy-Koordinaten. Als Maß für die Anschwärzung wird dabei der Y-Wert in % herangezogen. Je höher der Y-Wert, desto heller ist das Muster. Zum Vergleich wird ein unbehandeltes Teppichmuster angeschmutzt und auf Anschwärzung gemessen. Die Ergebnisse der Schmutzabweisung sind in der Tabelle zusammengefasst.

**Tabelle 1:**

| Teppich appliziert mit | Filmbeurteilung auf PA 6 Folie | Helligkeit Y in % |
|---|---|---|
| Beispiel 1 | homogener, abriebfester Film | 53,68 ± 2,26 |
| Beispiel 2 | homogener, abriebfester Film | 48,59 ± 3,53 |
| Beispiel 3 | homogener, abriebfester Film | 38,53 ± 2,03 |
| Beispiel 4 | homogener, abriebfester Film | 38,17 ± 3,20 |
| Vergleichsprodukt 1 | spröder kristalliner Überzug, der sich leicht von der Polyamidfolie abwischen lässt. | 57,25 ± 2,50 |
| Vergleichsprodukt 2 | spröder kristalliner Überzug, der sich leicht von der Polyamidfolie abwischen lässt. | 26,73 ± 1,77 |
| Vergleichsprodukt 4 | homogener, abriebfester Film | 25,11 ± 2,84 |
| Vergleichsprodukt 5 | inhomogener, leicht abreibbarer Überzug | 57,29 ± 1,87 |
| Vergleichsprodukt 6, Binder | homogener, abriebfester Film | 26,01 ± 1, 90 |
| unbehandeltes Teppichmuster | --- | 22, 52 ± 1, 90 |

Die Ergebnisse der Tabelle zeigen, dass nur mit den erfindungsgemäßen Dispersionen der Beispiele 1-4 sowohl ein homogener, abriebfester Film erhalten wird als auch eine gute Schmutzabweisung auf Teppichen erzielt wird.

Der erfindungsgemäße Binder (silanhaltige Polyvinylalkohol) alleine gemäß Vergleichsprodukt 6 und der nanopartikelhaltige Poyvinylalkohol gemäß Vergleichsprodukt 4 ergeben zwar einen homogenen, abriebfesten Film, aber keine Schmutzabweisung.

Wird das Methylsilsesquioxan-Hydrosol ohne Binder gemäß den Vergleichsprodukten 1 und 2 eingesetzt, wird kein homogener abriebfester Film, sondern ein spröder kristalliner Überzug, der sich leicht von der Polyamidfolie abwischen lässt, erhalten.

Auch das Methylsilsesquioxan-Hydrosol mit fluorcarbonhaltigem Binder gemäß Vergleichsprodukt 5 ergibt keinen homogenen, abriebfesten Film sondern einen inhomogenen, leicht abreibbaren Überzug.

Die Verwendung von Polyvinylalkohol als Binder gemäß Vergleichsprodukt 3 anstelle des erfindungsgemäßen silanhaltigen Polyvinylalkohols als Binder führt zu keiner stabilen Dispersion, sondern es bildet sich ein festes Gel, das nicht verwendet werden kann.

## Patentansprüche

1. Binderhaltige kolloidale wässrige Dispersionen (B) enthaltend
(a) Organopolysiloxane aus Einheiten der allgemeinen Formel
R¹ₓSi (OR²)_{y}O_{(4-x-y)/2} (I),
wobei x 0, 1, 2 oder 3 und y 0, 1 oder 2 ist,
mit der Maßgabe, dass die Summe x+y≤3 ist,
R¹ gleich oder verschieden ist und einen SiC-gebundenen einwertigen Kohlenwasserstoffrest mit 1 bis 18 Kohlenstoffatom(en) je Rest, der gegebenenfalls gegenüber Wasser inerte Substituenten aufweisen kann, bedeutet, R² gleich oder verschieden sein kann und ein Wasserstoffatom oder einen Kohlenwasserstoffrest mit 1 bis 18 Kohlenstoffatom(en) je Rest, der durch ein oder mehrere voneinander separate Sauerstoffatome unterbrochen sein kann, oder einen Rest der Formel -COCH₃, -COC₂H₅ oder -CH₂CH₂OH bedeutet,
(b) wasserlösliche oder selbstdispergierende silanhaltige Polyvinylalkohle und/oder Polyvinylester und/oder deren Copolymerisate mit der Maßgabe, dass mehr als 50 Mol-% voll- oder teilverseifte Vinylestereinheiten enthalten sind, wobei mindestens eine der Monomereinheiten ein gebundenes Silan enthält, mit der Maßgabe, dass bei der Herstellung von (b) als Silane solche der allgemeinen Formel
R³SiR⁴ₐ(OR⁵)₃₋ₐ,
wobei a = 0, 1 oder 2 ist und R³ die Bedeutung CH₂=CR⁶- (CH₂)₀₋₃- oder CH₂=CR⁶CO₂(CH₂)₁₋₃- hat, R⁴ die Bedeutung C₁- bis C₃-Alkylrest, C₁- bis C₃-Alkoxyrest oder Halogen hat, R⁵ ein unverzweigter oder verzweigter, gegebenenfalls substituierter Alkylrest mit 1 bis 12 C-Atomen oder ein Acylrest mit 2 bis 12 C-Atomen ist, wobei R⁵ gegebenenfalls durch eine Ethergruppe unterbrochen sein kann, und R⁶ für H oder CH₃ steht, oder solche der allgemeinen Formel
CH₂=CR⁷-CO-NR⁸-R⁹-SiR¹⁰ₘ- (R¹¹)₃₋ₘ,
wobei m = 0 bis 2, R⁷ entweder H oder eine Methyl-Gruppe ist, R⁸ H oder eine Alkyl-Gruppe mit 1 bis 5 C-Atomen ist, R⁹ eine Alkylen-Gruppe mit 1 bis 5 C-Atomen oder eine bivalente organische Gruppe in welcher die Kohlenstoffkette durch ein O- oder N-Atom unterbrochen wird, ist, R¹⁰ eine Alkyl-Gruppe mit 1 bis 5 C-Atomen ist, R¹¹ eine Alkoxy-Gruppe mit 1 bis 40 C-Atomen ist, welche mit weiteren Heterocyclen substituiert sein können,
eingesetzt werden,
(c) gegebenenfalls oberflächenaktive Verbindungen, wie Emulgatoren, und
(d) Wasser.

2. Binderhaltige kolloidale wässrige Dispersionen (B) nach Anspruch 1, **dadurch gekennzeichnet, dass** sie
(e) wassermischbare Zusätze ausgewählt aus der Gruppe von Säuren, wie z.B. Ameisensäure, Essigsäure, Propionsäure, Phosphorsäure, Salzsäure, Schwefelsäure; Basen, wie z.B. Triethylamin, Triethanolamin, Trioctylamin, wässrige Ammoniaklösung, Lithiumhydroxid, Natriumhydroxid, Kaliumhydroxid, Cäsiumhydroxid; Ethylen- oder Polyethylenglykol, 1,2-Propandiol, 1,3-Propandiol, Polypropylenglykol, Diethylenglykolmonobutylether oder Glycerin; Dispersionen oder Emulsionen, wie Emulsionen natürlicher oder synthetischer Öle, Harze oder Wachse, wie z.B. Carnaubawachs-, Bienenwachs-, Wollwachs-, Aloe Vera-, Vitamin E-, Paraffinöl-, unreaktive Siliconöl-, unreaktive Siliconharz-, Jojobaöl-, Reisöl-, Calendulaöl-, Teebaumöl-, Rosenöl- oder Melissenöl-Emulsionen; handelsübliche Konservierungsmittel für Dispersionen, wie z.B. Isothiazolinone oder Parabene, bzw. deren wässrigen Formulierungen enthalten.

3. Binderhaltige kolloidale wässrige Dispersionen (B) nach Anspruch 1 oder 2, **dadurch gekennzeichnet, dass** als silanhaltige Polyvinylalkohole (b) solche eingesetzt werden, hergestellt durch radikalische Pfropfpolymerisation von Vinylalkoholpolymerisaten mit ethylenisch ungesättigten silanhaltigen Monomeren.

4. Binderhaltige kolloidale wässrige Dispersionen (B) nach Anspruch 1 oder 2, **dadurch gekennzeichnet, dass** als silanhaltige Polyvinylalkohole (b) solche eingesetzt werden, hergestellt durch radikalische Polymerisation von Vinylestern mit ethylenisch ungesättigten silanhaltigen Monomeren und gegebenenfalls weiteren damit copolymerisaierbaren Comonomeren und Verseifung der erhaltenen Polymerisate.

5. Verfahren zur Herstellung von binderhaltigen kolloidalen wässrigen Dispersionen (B) durch Vermischen von wässrigen kolloidalen Organopolysiloxandispersionen (A) enthaltend
(a) Organopolysiloxanen aus Einheiten der Formel
R¹ₓSi(OR²)_{y}O(_{4-x-y)/2} (I),
wobei x 0, 1, 2 oder 3 und y 0, 1 oder 2 ist,
mit der Maßgabe, dass die Summe x+y≤3 ist,
R¹ gleich oder verschieden ist und einen SiC-gebundenen einwertigen Kohlenwasserstoffrest mit 1 bis 18 Kohlenstoffatom(en) je Rest, der gegebenenfalls gegenüber Wasser inerte Substituenten aufweisen kann, bedeutet, R² gleich oder verschieden sein kann und ein Wasserstoffatom oder einen Kohlenwasserstoffrest mit 1 bis 18 Kohlenstoffatom(en) je Rest, der durch ein oder mehrere voneinander separate Sauerstoffatom unterbrochen sein kann, oder einen Rest der Formel -COCH₃, -COC₂H₅ oder -CH₂CH₂OH bedeutet,
(c) gegebenenfalls oberflächenaktive Verbindungen, wie Emulgatoren, und
(d) Wasser
mit
(b) wasserlöslichen oder selbstdispergierenden silanhaltigen Polyvinylalkohlen und/oder Polyvinylacetaten und/oder deren Copolymerisaten mit der Maßgabe, dass mehr als 50 Mol-% voll- oder teilverseifte Vinylestereinheiten enthalten sind, wobei mindestens eine der Monomereinheiten ein gebundenes Silan enthält, mit der Maßgabe, dass bei der Herstellung von (b) als Silane solche der allgemeinen Formel
R³SiR⁴ₐ(OR⁵)₃₋ₐ,
wobei a = 0, 1 oder 2 ist und R³ die Bedeutung CH₂=CR⁶- (CH₂)₀₋₃- oder CH₂=CR⁶CO₂(CH₂)₁₋₃- hat, R⁴ die Bedeutung C₁- bis C₃-Alkylrest, C₁- bis C₃-Alkoxyrest oder Halogen hat, R⁵ ein unverzweigter oder verzweigter, gegebenenfalls substituierter Alkylrest mit 1 bis 12 C-Atomen oder ein Acylrest mit 2 bis 12 C-Atomen ist, wobei R⁵ gegebenenfalls durch eine Ethergruppe unterbrochen sein kann, und R⁶ für H oder CH₃ steht, oder solche der allgemeinen Formel
CH₂=CR⁷-CO-NR⁸-R⁹-SiR¹⁰ₘ-(R¹¹)₃₋ₘ,
wobei m = 0 bis 2, R⁷ entweder H oder eine Methyl-Gruppe ist, R⁸ H oder eine Alkyl-Gruppe mit 1 bis 5 C-Atomen ist, R⁹ eine Alkylen-Gruppe mit 1 bis 5 C-Atomen oder eine bivalente organische Gruppe in welcher die Kohlenstoffkette durch ein O- oder N-Atom unterbrochen wird, ist, R¹⁰ eine Alkyl-Gruppe mit 1 bis 5 C-Atomen ist, R¹¹ eine Alkoxy-Gruppe mit 1 bis 40 C-Atomen ist, welche mit weiteren Heterocyclen substituiert sein können,
eingesetzt werden.

6. Verfahren zur Behandlung von faserartigen und folienartigen Substraten mit binderhaltigen kolloidalen wässrigen Dispersionen (B) enthaltend
(a) Organopolysiloxane aus Einheiten der allgemeinen Formel
R¹ₓSi(OR²)_{y}O_{(4-x-y)/2} (I),
wobei x 0, 1, 2 oder 3 und y 0, 1 oder 2 ist,
mit der Maßgabe, dass die Summe x+y≤3 ist,
R¹ gleich oder verschieden ist und einen SiC-gebundenen einwertigen Kohlenwasserstoffrest mit 1 bis 18 Kohlenstoffatom(en) je Rest, der gegebenenfalls gegenüber Wasser inerte Substituenten aufweisen kann, bedeutet,
R² gleich oder verschieden sein kann und ein Wasserstoffatom oder einen Kohlenwasserstoffrest mit 1 bis 18 Kohlenstoffatom(en) je Rest, der durch ein oder mehrere voneinander separate Sauerstoffatom unterbrochen sein kann, oder einen Rest der Formel -COCH₃, -C0C₂H₅ oder -CH₂CH₂OH bedeutet,
(b) wasserlösliche oder selbstdispergierende silanhaltige Polyvinylalkohle und/oder Polyvinylester und/oder deren Copolymerisate mit der Maßgabe, dass mehr als 50 Mol-% voll- oder teilverseifte Vinylestereinheiten enthalten sind, wobei mindestens eine der Monomereinheiten ein gebundenes Silan enthält, mit der Maßgabe, dass bei der Herstellung von (b) als Silane solche der allgemeinen Formel
R³SiR⁴ₐ(OR⁵)₃₋ₐ,
wobei a = 0, 1 oder 2 ist und R³ die Bedeutung CH₂=CR⁶-(CH₂)₀₋₃- oder CH₂=CR⁶CO₂(CH₂)₁₋₃- hat, R⁴ die Bedeutung C₁- bis C₃-Alkylrest, C₁- bis C₃-Alkoxyrest oder Halogen hat, R⁵ ein unverzweigter oder verzweigter, gegebenenfalls substituierter Alkylrest mit 1 bis 12 C-Atomen oder ein Acylrest mit 2 bis 12 C-Atomen ist, wobei R⁵ gegebenenfalls durch eine Ethergruppe unterbrochen sein kann, und R⁶ für H oder CH₃ steht, oder solche der allgemeinen Formel
CH₂=CR⁷-CO-NR⁸-R⁹-SiR¹⁰ₘ-(R¹¹)₃₋ₘ,
wobei m = 0 bis 2, R⁷ entweder H oder eine Methyl-Gruppe ist, R⁸ H oder eine Alkyl-Gruppe mit 1 bis 5 C-Atomen ist, R⁹ eine Alkylen-Gruppe mit 1 bis 5 C-Atomen oder eine bivalente organische Gruppe in welcher die Kohlenstoffkette durch ein O- oder N-Atom unterbrochen wird, ist, R¹⁰ eine Alkyl-Gruppe mit 1 bis 5 C-Atomen ist, R¹¹ eine Alkoxy-Gruppe mit 1 bis 40 C-Atomen ist, welche mit weiteren Heterocyclen substituiert sein können,
eingesetzt werden,
(c) gegebenenfalls oberflächenaktiver Verbindungen, wie Emulgatoren,
(d) Wasser.

7. Verfahren nach Anspruch 6, **dadurch gekennzeichnet, dass** die binderhaltigen kolloidalen wässrigen Dispersionen (B) hergestellt werden durch Vermischen von wässrigen kolloidalen Organopolysiloxandispersionen (A) enthaltend
(a) Organopolysiloxanen aus Einheiten der Formel
R¹ₓSi (OR²)_{y}O_{(4-x-y)/2} (I),
wobei x 0, 1, 2 oder 3 und y 0, 1 oder 2 ist,
mit der Maßgabe, dass die Summe x+y≤3 ist,
R¹ gleich oder verschieden ist und einen SiC-gebundenen einwertigen Kohlenwasserstoffrest mit 1 bis 18 Kohlenstoffatom(en) je Rest, der gegebenenfalls gegenüber Wasser inerte Substituenten aufweisen kann, bedeutet,
R² gleich oder verschieden sein kann und ein Wasserstoffatom oder einen Kohlenwasserstoffrest mit 1 bis 18 Kohlenstoffatom(en) je Rest, der durch ein oder mehrere voneinander separate Sauerstoffatom unterbrochen sein kann, oder einen Rest der Formel -COCH₃, -COC₂H₅ oder -CH₂CH₂OH bedeutet,
(c) gegebenenfalls oberflächenaktive Verbindungen, wie Emulgatoren, und
(d) Wasser
mit
(b) wasserlöslichen oder selbstdispergierenden silanhaltigen Polyvinylalkohlen und/oder Polyvinylacetaten und/oder deren Copolymerisaten mit der Maßgabe, dass mehr als 50 Mol-% voll- oder teilverseifte Vinylestereinheiten enthalten sind, wobei mindestens eine der Monomereinheiten ein gebundenes Silan enthält, mit der Maßgabe, dass bei der Herstellung von (b) als Silane solche der allgemeinen Formel
R³SiR⁴ₐ(OR⁵)₃₋ₐ,
wobei a = 0, 1 oder 2 ist und R³ die Bedeutung CH₂=CR⁶- (CH₂)₀₋₃- oder CH₂=CR⁶CO₂(CH₂)₁₋₃- hat, R⁴ die Bedeutung C₁- bis C₃-Alkylrest, C₁- bis C₃-Alkoxyrest oder Halogen hat, R⁵ ein unverzweigter oder verzweigter, gegebenenfalls substituierter Alkylrest mit 1 bis 12 C-Atomen oder ein Acylrest mit 2 bis 12 C-Atomen ist, wobei R⁵ gegebenenfalls durch eine Ethergruppe unterbrochen sein kann, und R⁶ für H oder CH₃ steht, oder solche der allgemeinen Formel
CH₂=CR⁷-CO-NR⁸-R⁹-SiR¹⁰ₘ-(R¹¹)₃₋ₘ,
wobei m = 0 bis 2, R⁷ entweder H oder eine Methyl-Gruppe ist, R⁸ H oder eine Alkyl-Gruppe mit 1 bis 5 C-Atomen ist, R⁹ eine Alkylen-Gruppe mit 1 bis 5 C-Atomen oder eine bivalente organische Gruppe in welcher die Kohlenstoffkette durch ein O- oder N-Atom unterbrochen wird, ist, R¹⁰ eine Alkyl-Gruppe mit 1 bis 5 C-Atomen ist, R¹¹ eine Alkoxy-Gruppe mit 1 bis 40 C-Atomen ist, welche mit weiteren Heterocyclen substituiert sein können,
eingesetzt werden.

8. Verfahren nach Anspruch 6 oder 7, **dadurch gekennzeichnet, dass** Substrate textile Bodenbeläge, vorzugsweise Teppiche und Teppichböden, verwendet werden.

9. Verfahren nach Anspruch 6, 7 oder 8, **dadurch gekennzeichnet, dass** die binderhaltigen kolloidalen wässrigen Dispersionen (B) nach Anspruch 6 oder hergestellt nach Anspruch 7 auf die Substrate aufgetragen werden und trocknen gelassen werden.

## Claims

1. Binder-containing colloidal aqueous dispersions (B) containing
(a) organopolysiloxanes composed of units of the general formula
R¹ₓSi(OR²)_{y}O_{(4-x-y)/2} (I)
where x is 0, 1, 2 or 3 and y is 0, 1 or 2, with the proviso that the sum total x + y is ≤ 3,
R¹ in each occurrence is the same or different and represents an SiC-bonded monovalent hydrocarbyl radical having 1 to 18 carbon atoms per radical, which may optionally include water-inert substituents,
R² in each occurrence may be the same or different and represents a hydrogen atom or a hydrocarbyl radical having 1 to 18 carbon atoms per radical which may be interrupted by one or more mutually separated oxygen atoms, or a radical of the formula -COCH₃, -COC₂H₅ or -CH₂CH₂OH,
(b) water-soluble or self-dispersing silane-containing polyvinyl alcohols and/or polyvinyl esters and/or copolymers thereof with the proviso that more than 50 mol% of fully or partially saponified vinyl ester units are present, wherein at least one of the monomer units contains an attached silane, with the proviso that, in the preparation of (b), the silanes used are those of the general formula
R³SiR⁴(OR⁵)₃₋ₐ,
where a is 0, 1 or 2, R³ is CH₂=CR⁶- (CH₂)₀₋₃- or CH₂=CR⁶CO₂(CH₂)₁₋₃-, R⁴ is C₁- to C₃-alkyl, C₁- to C₃-alkoxy or halogen, R⁵ is a branched or unbranched, optionally substituted alkyl radical having 1 to 12 carbon atoms or is an acyl radical having 2 to 12 carbon atoms, in which case R⁵ may optionally be interrupted by an ether group, and R⁶ is H or CH₃,
or those of the general formula
CH₂=CR⁷-CO-NR⁸-R⁹- SiR¹⁰ₘ-(R¹¹)₃₋ₘ,
where m is 0 to 2, R⁷ is either H or methyl, R⁸ is H or an alkyl group having 1 to 5 carbon atoms, R⁹ is an alkylene group having 1 to 5 carbon atoms or a bivalent organic group in which the carbon chain is interrupted by an oxygen or a nitrogen atom, R¹⁰ is an alkyl group having 1 to 5 carbon atoms, R¹¹ is an alkoxy group having 1 to 40 carbon atoms, which may be substituted with further heterocycles,
(c) optionally surface-active compounds, such as emulsifiers, and
(d) water.

2. Binder-containing colloidal aqueous dispersions (B) according to Claim 1, **characterized in that** they contain
(e) water-miscible additions selected from the group of acids, for example formic acid, acetic acid, propionic acid, phosphoric acid, hydrochloric acid, sulfuric acid; bases, for example triethylamine, triethanolamine, trioctylamine, aqueous ammonia solution, lithium hydroxide, sodium hydroxide, potassium hydroxide, cesium hydroxide; ethylene glycol, polyethylene glycol, 1,2-propanediol, 1,3-propanediol, polypropylene glycol, diethylene glycol monobutyl ether or glycerol; dispersions or emulsions, such as emulsions of natural or synthetic oils, resins or waxes, for example carnauba wax, beeswax, wool wax, aloe vera, vitamin E, paraffin oil, unreactive silicone oil, unreactive silicone resin, jojoba oil, rice oil, calendula oil, tea tree oil, rose oil or balm oil emulsions; commercially available preservatives for dispersions, for example, isothiazolinones or parabens, or aqueous formulations thereof.

3. Binder-containing colloidal aqueous dispersions (B) according to Claim 1 or 2, **characterized in that** said silane-containing polyvinyl alcohols (b) comprise silane-containing polyvinyl alcohols prepared by free-radical graft polymerization of vinyl alcohol polymers with ethylenically unsaturated silane-containing monomers.

4. Binder-containing colloidal aqueous dispersions (B) according to Claim 1 or 2, **characterized in that** said silane-containing polyvinyl alcohols (b) comprise silane-containing polyvinyl alcohols prepared by free-radical polymerization of vinyl esters with ethylenically unsaturated silane-containing monomers and optionally further copolymerizable comonomers and saponification of the resulting polymers.

5. Process for preparing binder-containing colloidal aqueous dispersions (B) by mixing aqueous colloidal organopolysiloxane dispersions (A) containing
(a) organopolysiloxanes composed of units of the formula
R¹ₓSi(OR²)_{y}O_{(4-x-y)/2} (I)
where x is 0, 1, 2 or 3 and y is 0, 1 or 2, with the proviso that the sum total x + y is ≤ 3,
R¹ in each occurrence is the same or different and represents an SiC-bonded monovalent hydrocarbyl radical having 1 to 18 carbon atoms per radical, which may optionally include water-inert substituents,
R² in each occurrence may be the same or different and represents a hydrogen atom or a hydrocarbyl radical having 1 to 18 carbon atoms per radical which may be interrupted by one or more mutually separated oxygen atoms, or a radical of the formula -COCH₃, -COC₂H₅ or -CH₂CH₂OH,
(c) optionally surface-active compounds, such as emulsifiers, and
(d) water,
with
(b) water-soluble or self-dispersing silane-containing polyvinyl alcohols and/or polyvinyl acetates and/or copolymers thereof with the proviso that more than 50 mol% of fully or partially saponified vinyl ester units are present, wherein at least one of the monomer units contains an attached silane, with the proviso that, in the preparation of (b), the silanes used are those of the general formula
R³SiR⁴ₐ(OR⁵)₃₋ₐ,
where a is 0, 1 or 2, R³ is CH₂=CR⁶-(CH₂)₀₋₃- or CH₂=CR⁶CO₂(CH₂)₁₋₃-, R⁴ is C₁- to C₃-alkyl, C₁- to C₃-alkoxy or halogen, R⁵ is a branched or unbranched, optionally substituted alkyl radical having 1 to 12 carbon atoms or is an acyl radical having 2 to 12 carbon atoms, in which case R⁵ may optionally be interrupted by an ether group, and R⁶ is H or CH₃,
or those of the general formula
CH₂=CR⁷-CO-NR⁸-R⁹-SiR¹⁰ₘ-(R¹⁰)₃₋ₘ,
where m is 0 to 2, R⁷ is either H or methyl, R⁸ is H or an alkyl group having 1 to 5 carbon atoms, R⁹ is an alkylene group having 1 to 5 carbon atoms or a bivalent organic group in which the carbon chain is interrupted by an oxygen or a nitrogen atom, R¹⁰ is an alkyl group having 1 to 5 carbon atoms, R¹¹ is an alkoxy group having 1 to 40 carbon atoms, which may be substituted with further heterocycles.

6. Process for treating fiber-type and sheet-type substrates with binder-containing colloidal aqueous dispersions (B) containing
(a) organopolysiloxanes composed of units of the general formula
R¹ₓSi(OR²)_{y}O_{(4-x-y)/2} (I)
where x is 0, 1, 2 or 3 and y is 0, 1 or 2, with the proviso that the sum total x + y is ≤ 3,
R¹ in each occurrence is the same or different and represents an SiC-bonded monovalent hydrocarbyl radical having 1 to 18 carbon atoms per radical, which may optionally include water-inert substituents,
R² in each occurrence may be the same or different and represents a hydrogen atom or a hydrocarbyl radical having 1 to 18 carbon atoms per radical which may be interrupted by one or more mutually separated oxygen atoms, or a radical of the formula -COCH₃, -COC₂H₅ or -CH₂CH₂OH,
(b) water-soluble or self-dispersing silane-containing polyvinyl alcohols and/or polyvinyl esters and/or copolymers thereof with the proviso that more than 50 mol% of fully or partially saponified vinyl ester units are present, wherein at least one of the monomer units contains an attached silane, with the proviso that, in the preparation of (b), the silanes used are those of the general formula
R³SiR⁴ₐ(OR⁵)₃₋ₐ,
where a is 0, 1 or 2, R³ is CH₂=CR⁶-(CH₂)₀₋₃- or CH₂=CR⁶CO₂(CH₂₎₁₋₃-, R⁴ is C₁- to C₃-alkyl, C₁- to C₃-alkoxy or halogen, R⁵ is a branched or unbranched, optionally substituted alkyl radical having 1 to 12 carbon atoms or is an acyl radical having 2 to 12 carbon atoms, in which case R⁵ may optionally be interrupted by an ether group, and R⁶ is H or CH₃,
or those of the general formula
CH₂=CR⁷-CO-NR⁸-R⁹-SiR¹⁰ₘ-(R¹¹)₃₋ₘ,
where m is 0 to 2, R⁷ is either H or methyl, R⁸ is H or an alkyl group having 1 to 5 carbon atoms, R⁹ is an alkylene group having 1 to 5 carbon atoms or a bivalent organic group in which the carbon chain is interrupted by an oxygen or a nitrogen atom, R¹⁰ is an alkyl group having 1 to 5 carbon atoms, R¹¹ is an alkoxy group having 1 to 40 carbon atoms, which may be substituted with further heterocycles,
(c) optionally surface-active compounds, such as emulsifiers,
(d) water.

7. Process according to Claim 6, **characterized in that** the binder-containing colloidal aqueous dispersions (B) are prepared by mixing aqueous colloidal organopolysiloxane dispersions (A) containing
(a) organopolysiloxanes composed of units of the formula
R¹ₓSi(OR²)_{y}O_{(4-x-y)/2} (I)
where x is 0, 1, 2 or 3 and y is 0, 1 or 2, with the proviso that the sum total x + y is ≤ 3,
R¹ in each occurrence is the same or different and represents an SiC-bonded monovalent hydrocarbyl radical having 1 to 18 carbon atoms per radical, which may optionally include water-inert substituents,
R² in each occurrence may be the same or different and represents a hydrogen atom or a hydrocarbyl radical having 1 to 18 carbon atoms per radical which may be interrupted by one or more mutually separated oxygen atoms, or a radical of the formula -COCH₃, -COC₂H₅ or -CH₂CH₂OH,
(c) optionally surface-active compounds, such as emulsifiers, and
(d) water,
with
(b) water-soluble or self-dispersing silane-containing polyvinyl alcohols and/or polyvinyl acetates and/or copolymers thereof with the proviso that more than 50 mol% of fully or partially saponified vinyl ester units are present, wherein at least one of the monomer units contains an attached silane, with the proviso that, in the preparation of (b), the silanes used are those of the general formula
R³SiR⁴ₐ(OR⁵)₃₋ₐ,
where a is 0, 1 or 2, R³ is CH₂=CR₆-(CH₂)₀₋₃- or CH₂=CR⁶CO₂(CH₂)₁₋₃-, R⁴ is C₁- to C₃-alkyl, C₁- to C₃-alkoxy or halogen, R⁵ is a branched or unbranched, optionally substituted alkyl radical having 1 to 12 carbon atoms or is an acyl radical having 2 to 12 carbon atoms, in which case R⁵ may optionally be interrupted by an ether group, and R⁶ is H or CH₃,
or those of the general formula
CH₂=CR⁷-CO-NR⁸-R⁹-SiR¹⁰ₘ-(R¹¹)₃₋ₘ,
where m is 0 to 2, R⁷ is either H or methyl, R⁸ is H or an alkyl group having 1 to 5 carbon atoms, R⁹ is an alkylene group having 1 to 5 carbon atoms or a bivalent organic group in which the carbon chain is interrupted by an oxygen or a nitrogen atom, R¹⁰ is an alkyl group having 1 to 5 carbon atoms, R¹¹ is an alkoxy group having 1 to 40 carbon atoms, which may be substituted with further heterocycles.

8. Process according to Claim 6 or 7, **characterized in that** substrates used are textile floor coverings, preferably carpets and carpet flooring.

9. Process according to Claim 6, 7 or 8, **characterized in that** the binder-containing colloidal aqueous dispersions (B) according to Claim 6 or prepared according to Claim 7 are applied to the substrates and allowed to dry.

## Revendications

1. Dispersions aqueuses colloïdales (B) contenant des liants, qui contiennent
(a) des organopolysiloxanes à base de motifs de formule générale
R¹Si(OR²)_{y}O_{(4-x-y)/2} (I),
dans laquelle x est 0, 1, 2 ou 3 et y est 0, 1 ou 2,
étant entendu que la somme x+y est ≤3,
R¹ est le même ou différent et représente un radical hydrocarboné monovalent lié par une liaison SiC, ayant de 1 à 18 atome (s) de carbone par radical, qui peut éventuellement comporter des substituants inertes vis-à-vis de l'eau,
R² peut être le même ou différent et représente un atome d'hydrogène ou un radical hydrocarboné ayant de 1 à 18 atome (s) de carbone par radical, qui peut être interrompu par un ou plusieurs atomes d'oxygène séparés les uns des autres, ou un radical de formule -COCH₃, -COC₂H₅ ou -CH₂CH₂OH,
(b) des poly(alcool vinylique)s et/ou poly(ester vinylique)s silanés hydrosolubles ou autodispersables et/ou leurs copolymérisats, étant entendu que plus de 50 % en moles de motifs ester vinylique totalement ou partiellement saponifiés sont contenus, au moins l'un des motifs monomères contenant un silane lié, étant entendu que dans la préparation de (b), on utilise comme silanes ceux de formule générale
R³SiR⁴ₐ(OR⁵)₃₋ₐ,
dans laquelle a = 0, 1 ou 2 et R³ a la signification de CH₂=CR⁶- (CH₂)₀₋₃- ou CH₂=CR⁶CO₂(CH₂)₁₋₃₋, R⁴ a la signification d'un radical alkyle en C₁-C₃, d'un radical alcoxy en C₁-C₃ ou d'un atome d'halogène, R⁵ est un radical alkyle ramifié ou non ramifié, éventuellement substitué, ayant de 1 à 12 atomes de carbone, ou un radical acyle ayant de 2 à 12 atomes de carbone, R⁵ pouvant éventuellement être interrompu par un groupe éther, et R⁶ représente H ou CH₃,
ou ceux de formule générale
CH₂=CR⁷-CO-NR⁸-R⁹-SiR¹⁰ₘ-(R¹¹)₃₋ₘ,
dans laquelle m = 0 à 2, R⁷ est soit H, soit un groupe méthyle, R⁸ est H ou un groupe alkyle ayant de 1 à 5 atomes de carbone, R⁹ est un groupe alkylène ayant de 1 à 5 atomes de carbone ou un groupe organique divalent dans lequel la chaîne carbonée est interrompue par un atome d'oxygène ou d'azote, R¹⁰ est un groupe alkyle ayant de 1 à 5 atomes de carbone, R¹¹ est un groupe alcoxy ayant de 1 à 40 atomes de carbone, qui peuvent être substitués par d'autres hétérocycles,
(c) éventuellement des composés tensioactifs, tels que des émulsifiants, et
(d) de l'eau.

2. Dispersions aqueuses colloïdales (B) contenant des liants selon la revendication 1, **caractérisées en ce qu'**elles contiennent
(e) des additifs miscibles à l'eau, choisis dans le groupe constitué par des acides, par exemple l'acide formique, l'acide acétique, l'acide propionique, l'acide phosphorique, l'acide chlorhydrique, l'acide sulfurique ; des bases, par exemple la triéthylamine, la triéthanolamine, la trioctylamine, une solution aqueuse d'ammoniac, l'hydroxyde de lithium, l'hydroxyde de sodium, l'hydroxyde de potassium, l'hydroxyde de césium ; l'éthylèneglycol ou le polyéthylèneglycol, le 1,2-propanediol, le 1,3-propanediol, le polypropylèneglycol, l'éther monobutylique de diéthylèneglycol ou le glycérol ; des dispersions ou émulsions, telles que des émulsions d'huiles, résines ou cires, naturelles ou synthétiques, par exemple des émulsions de cire de carnauba, cire d'abeille, lanoline, Aloe vera, vitamine E, huile de paraffine, huile de silicone non réactive, résine de silicone non réactive, huile de jojoba, huile de riz, huile de calendula, huile de théier, huile de rose ou huile de mélisse ; des conservateurs du commerce pour dispersions, par exemple les isothiazolinones ou les parabènes, ou des compositions aqueuses de ceux-ci.

3. Dispersions aqueuses colloïdales (B) contenant des liants selon la revendication 1 ou 2, **caractérisées en ce qu'**on utilise comme poly(alcool vinylique)s silanés (b) ceux préparés par polymérisation par greffage radicalaire de polymérisats d'alcool vinylique avec des monomères silanés à insaturation éthylénique.

4. Dispersions aqueuses colloïdales (B) contenant des liants selon la revendication 1 ou 2, **caractérisées en ce qu'**on utilise comme poly(alcool vinylique)s silanés (b) ceux préparés par polymérisation radicalaire d'esters vinyliques avec des monomères silanés à insaturation éthylénique et éventuellement d'autres comonomères copolymérisables avec ceux-ci, et saponification des polymérisats obtenus.

5. Procédé pour la préparation de dispersions aqueuses colloïdales (B) contenant des liants, par mélange de dispersions aqueuses colloïdales d'organopolysiloxanes (A) contenant
(a) des organopolysiloxanes à base de motifs de formule
R¹ₓSi(OR²)_{y}O_{(4-x-y)/2} (I),
dans laquelle x est 0, 1, 2 ou 3 et y est 0, 1 ou 2,
étant entendu que la somme x+y est ≤3,
R¹ est le même ou différent et représente un radical hydrocarboné monovalent lié par une liaison SiC, ayant de 1 à 18 atome (s) de carbone par radical, qui peut éventuellement comporter des substituants inertes vis-à-vis de l'eau,
R² peut être le même ou différent et représente un atome d'hydrogène ou un radical hydrocarboné ayant de 1 à 18 atome (s) de carbone par radical, qui peut être interrompu par un ou plusieurs atomes d'oxygène séparés les uns des autres, ou un radical de formule -COCH₃, -COC₂H₅ ou -CH₂CH₂OH
(c) éventuellement des composés tensioactifs, tels que des émulsifiants, et
(d) de l'eau
avec
(b) des poly(alcool vinylique)s et/ou poly(acétate de vinyle)s silanés hydrosolubles ou autodispersables et/ou leurs copolymérisats, étant entendu que plus de 50 % en moles de motifs ester vinylique totalement ou partiellement saponifiés sont contenus, au moins l'un des motifs monomères contenant un silane lié, étant entendu que dans la préparation de (b) on utilise comme silanes ceux de formule générale
R³SiR⁴ₐ(OR⁵)₃₋ₐ,
dans laquelle a = 0, 1 ou 2 et R³ a la signification de CH₂=CR⁶-(CH₂)₀₋₃- ou CH₂=CR⁶CO₂(CH₂)₁₋₃, R⁴ a la signification d'un radical alkyle en C₁-C₃, d'un radical alcoxy en C₁-C₃ ou d'un atome d'halogène, R⁵ a la signification d'un radical alkyle ramifié ou non ramifié, éventuellement substitué, ayant de 1 à 12 atomes de carbone, ou d'un radical acyle ayant de 2 à 12 atomes de carbone, R⁵ pouvant éventuellement être interrompu par un groupe éther, et R⁶ représente H ou CH₃,
ou ceux de formule générale
CH₂=CR⁷-CO-NR⁸-R⁹-SiR¹⁰ₘ-(R¹¹)₃₋ₘ,
dans laquelle m = 0 à 2, R⁷ est soit H, soit un groupe méthyle, R⁸ est H ou un groupe alkyle ayant de 1 à 5 atomes de carbone, R⁹ est un groupe alkylène ayant de 1 à 5 atomes de carbone ou un groupe organique divalent dans lequel la chaîne carbonée est interrompue par un atome d'oxygène ou d'azote, R¹⁰ est un groupe alkyle ayant de 1 à 5 atomes de carbone, R¹¹ est un groupe alcoxy ayant de 1 à 40 atomes de carbone, qui peuvent être substitués par d'autres hétérocycles.

6. Procédé pour le traitement de supports fibreux et de type feuille par des dispersions aqueuses colloïdales (B) contenant des liants, qui contiennent
(a) des organopolysiloxanes à base de motifs de formule générale
R¹ₓSi(OR²)_{y}O_{(4-x-y)/2} (I),
dans laquelle x est 0, 1, 2 ou 3 et y est 0, 1 ou 2,
étant entendu que la somme x+y est ≤3,
R¹ est le même ou différent et représente un radical hydrocarboné monovalent lié par une liaison SiC, ayant de 1 à 18 atome (s) de carbone par radical, qui peut éventuellement comporter des substituants inertes vis-à-vis de l'eau,
R² peut être le même ou différent et représente un atome d'hydrogène ou un radical hydrocarboné ayant de 1 à 18 atome(s) de carbone par radical, qui peut être interrompu par un ou plusieurs atomes d'oxygène séparés les uns des autres, ou un radical de formule -COCH₃, -COC₂H₅ ou -CH₂CH₂OH
(b) des poly(alcool vinylique)s et/ou poly(ester vinylique)s silanés hydrosolubles ou autodispersables et/ou leurs copolymérisats, étant entendu que plus de 50 % en moles de motifs ester vinylique totalement ou partiellement saponifiés sont contenus, au moins l'un des motifs monomères contenant un silane lié, étant entendu que dans la préparation de (b), on utilise comme silanes ceux de formule générale
R³SiR⁴ₐ(OR⁵)₃₋ₐ,
dans laquelle a = 0, 1 ou 2 et R³ a la signification de CH₂=CR⁶- (CH₂)₀₋₃- ou CH₂=CR⁶CO₂(CH₂)₁₋₃-, R⁴ a la signification d'un radical alkyle en C₁-C₃, d'un radical alcoxy en C₁-C₃ ou d'un atome d'halogène, R⁵ a la signification d'un radical alkyle ramifié ou non ramifié, éventuellement substitué, ayant de 1 à 12 atomes de carbone, ou d'un radical acyle ayant de 2 à 12 atomes de carbone, R⁵ pouvant éventuellement être interrompu par un groupe éther, et R⁶ représente H ou CH₃,
ou ceux de formule générale
CH₂=CR⁷-CO-NR⁸-R⁹-SiR¹⁰ₘ-(R¹¹)₃₋ₘ,
dans laquelle m = 0 à 2, R⁷ est soit H, soit un groupe méthyle, R⁸ est H ou un groupe alkyle ayant de 1 à 5 atomes de carbone, R⁹ est un groupe alkylène ayant de 1 à 5 atomes de carbone ou un groupe organique divalent dans lequel la chaîne carbonée est interrompue par un atome d'oxygène ou d'azote, R¹⁰ est un groupe alkyle ayant de 1 à 5 atomes de carbone, R¹¹ est un groupe alcoxy ayant de 1 à 40 atomes de carbone, qui peuvent être substitués par d'autres hétérocycles,
(c) éventuellement des composés tensioactifs, tels que des émulsifiants, et
(d) de l'eau.

7. Procédé selon la revendication 6, **caractérisé en ce qu'**on prépare les dispersions aqueuses colloïdales (B) contenant des liants par mélange de dispersions aqueuses colloïdales d'organopolysiloxanes (A) contenant
(a) des organopolysiloxanes à base de motifs de formule
R¹ₓSi(OR²)_{y}O_{(4-x-y)/2} (I),
dans laquelle x est 0, 1, 2 ou 3 et y est 0, 1 ou 2,
étant entendu que la somme x+y est ≤3,
R¹ est le même ou différent et représente un radical hydrocarboné monovalent lié par une liaison SiC, ayant de 1 à 18 atome (s) de carbone par radical, qui peut éventuellement comporter des substituants inertes vis-à-vis de l'eau,
R² peut être le même ou différent et représente un atome d'hydrogène ou un radical hydrocarboné ayant de 1 à 18 atome (s) de carbone par radical, qui peut être interrompu par un ou plusieurs atomes d'oxygène séparés les uns des autres, ou un radical de formule -COCH₃, -COC₂H₅ ou -CH₂CH₂OH
(c) éventuellement des composés tensioactifs, tels que des émulsifiants, et
(d) de l'eau
avec
(b) des poly(alcool vinylique)s et/ou poly(acétate de vinyle)s silanés hydrosolubles ou autodispersables et/ou leurs copolymérisats, étant entendu que plus de 50 % en moles de motifs ester vinylique totalement ou partiellement saponifiés sont contenus, au moins l'un des motifs monomères contenant un silane lié, étant entendu que dans la préparation de (b), on utilise comme silanes ceux de formule générale
R³SiR⁴ₐ(OR⁵)₃₋ₐ,
dans laquelle a = 0, 1 ou 2 et R³ a la signification de CH₂=CR⁶- (CH₂)₀₋₃- ou CH₂=CR⁶CO₂(CH₂)₁₋₃-, R⁴ a la signification d'un radical alkyle en C₁-C₃, d'un radical alcoxy en C₁-C₃ ou d'un atome d'halogène, R⁵ a la signification d'un radical alkyle ramifié ou non ramifié, éventuellement substitué, ayant de 1 à 12 atomes de carbone ou d'un radical acyle ayant de 2 à 12 atomes de carbone, R⁵ pouvant éventuellement être interrompu par un groupe éther, et R⁶ représente H ou CH₃,
ou ceux de formule générale
CH₂=CR⁷-CO-NR⁸-R⁹-SiR¹⁰ₘ-(R¹¹)₃₋ₘ,
dans laquelle m = 0 à 2, R⁷ est soit H, soit un groupe méthyle, R⁸ est H ou un groupe alkyle ayant de 1 à 5 atomes de carbone, R⁹ est un groupe alkylène ayant de 1 à 5 atomes de carbone ou un groupe organique divalent dans lequel la chaîne carbonée est interrompue par un atome d'oxygène ou d'azote, R¹⁰ est un groupe alkyle ayant de 1 à 5 atomes de carbone, R¹¹ est un groupe alcoxy ayant de 1 à 40 atomes de carbone, qui peuvent être substitués par d'autres hétérocycles.

8. Procédé selon la revendication 6 ou 7, **caractérisé en ce que** l'on utilise comme supports des revêtements textiles de sol, de préférence des tapis ou des moquettes.

9. Procédé selon la revendication 6, 7 ou 8 **caractérisé en ce qu'**on applique sur les supports les dispersions aqueuses colloïdales (B) contenant des liants selon la revendication 6 ou préparées selon la revendication 7, et on les laisse sécher.
